# EUROPEAN PATENT APPLICATION

(11) **EP 4 579 108 A1**
(43) Date of publication of application: **02.07.2025**
(21) Application number: 23857323.2
(22) Date of filing: 21.08.2023
(51) Int. Cl.: F16J 15/34, F16J 15/44

(54) **SEGMENT SEAL**

(30) Priority: 23.08.2022 JP 2022132612
(71) Applicant: Eagle Industry Co., Ltd., Minato-ku Tokyo 105-8587 (JP); EagleBurgmann Japan Co., Ltd., Tokyo 105-8587 (JP)
(72) Inventor: NAGO, Norihiro, Tokyo 105-8587 (JP); WATANABE, Koji, Tokyo 105-8587 (JP); OTAKE, Yuya, Tokyo 105-8587 (JP)
(74) Representative: WSL Patentanwälte Partnerschaft mbB
(86) International application number: PCT/JP2023/030018
(87) International publication number: WO 2024/043212

(57) **Abstract**

Provided is a segment seal capable of performing a sealing function in a wide range of temperature by preventing a change in annular gap.

A segment seal 1A is disposed with the rotation thereof restricted between a housing 2 and a rotating shaft 3 extending through the housing 2, and seals a space between the housing 2 and the rotating shaft 3. The segment seal 1A includes: a base ring 10 fitted onto the rotating shaft 3 and constituted by a plurality of segments 12 segmented in a circumferential direction; and a resin ring 11 disposed side by side in an axial direction with the base ring 10. At least a portion of the base ring 10 is disposed on a high-pressure side in the axial direction of the resin ring 11, and the resin ring 11 has a greater thermal expansion coefficient than the base ring 10.

## Description

### {TECHNICAL FIELD}

The present invention relates to a segment seal, for example, a segment seal that is applied to rotating equipment and seals an annular space between a housing and a rotating shaft.

### {BACKGROUND ART}

Segment seals are known that are applied to rotating equipment such as industrial machinery and seal an annular space between a rotating shaft and a housing. For example, a segment seal disclosed in Patent Citation 1 includes a carbon seal ring that is in close contact with a side wall surface of an annular recess provided in a housing, is provided slidably on an outer peripheral surface of a rotating shaft, and has a structure having a plurality of segments segmented in a circumferential direction.

Specifically, the plurality of segments segmented in the circumferential direction is combined into an annular shape and an annular garter spring is attached to outer peripheral surfaces of the segments to hold the seal ring in an annular shape. Biasing means is disposed between the seal ring and one side wall surface of the annular recess provided in the housing, and due to the biasing force of the biasing means, the seal ring is pressed against the other side wall surface of the annular recess in the housing. In addition, a key fitted into a key groove provided in an end face of the seal ring is fixed to the housing to prevent the seal ring from rotating relative to the housing.

### {CITATION LIST}

### {Patent Literature}

Patent Citation 1: WO 2019/031377 (Page 8, FIG. 1)

### {SUMMARY OF INVENTION}

### {Technical Problem}

In segment seals such as that described in Patent Citation 1, the seal ring is made of carbon, making it less likely to be damaged even if it comes into contact with the rotating shaft. However, because carbon has a low thermal expansion coefficient, when the temperature range in the operating environment changes, for example from room temperature or a high temperature range to an extremely low temperature range, the seal ring may contract to a lesser extent than the rotating shaft, forming a large annular gap between the rotating shaft and the seal ring.

The present invention has been made in view of the problem described above, and an object thereof is to provide a segment seal capable of performing a sealing function in a wide range of temperature by preventing a change in annular gap.

### {Solution to Problem}

In order to solve the problem described above, a segment seal according to the present invention is disposed with rotation thereof restricted between a housing and a rotating shaft extending through the housing, and seals a space between the housing and the rotating shaft, the segment seal, including: a base ring fitted onto the rotating shaft and constituted by a plurality of segments segmented in a circumferential direction; and a resin ring disposed side by side in an axial direction with the base ring, wherein at least a portion of the base ring is disposed on a high-pressure side in the axial direction of the resin ring, and the resin ring has a higher thermal expansion coefficient than the base ring. According to the aforesaid feature of the present invention, since the base ring is disposed on the high-pressure side in the axial direction of the resin ring, the resin ring is less susceptible to the pressure of the fluid flowing in the axial direction from the high-pressure side to the low-pressure side. In addition, the ring performing the sealing function can be changed between the base ring and the resin ring depending on the operating temperature range. Additionally, the base ring performs the sealing function in a high-temperature environment, and the resin ring disposed side by side with the base ring performs the sealing function in a low-temperature environment, such that the segment seal can perform a sealing function in a wide range of temperature.

It may be preferable that the resin ring is attached to the base ring. According to this preferable configuration, the resin ring can be thermally deformed in the radial direction, such that an annular gap between the rotating shaft and the segment seal can be reliably adjusted without significant change.

It may be preferable that the base ring has a protrusion or a depression formed on a side surface of the base ring, and the resin ring has an engagement portion that is engaged with the protrusion or the depression. According to this preferable configuration, the resin ring and base ring can be easily attached to each other.

It may be preferable that a position of an outer-diameter-side portion of the resin ring is restricted by the base ring, the resin ring has an axial surface including an inner peripheral end portion of the resin ring, and the axial surface of the resin ring is parallel to an axial surface of the base ring opposite the axial surface of the resin ring. According to this preferable configuration, since the position of the outer-diameter-side portion of the resin ring is restricted by the base ring, the inner-diameter-side portion can be reliably slid radially inward during thermal deformation.

It may be preferable that the base ring has a recess that is open on an inner diameter side, and the resin ring is disposed in the recess. According to this preferable configuration, positions of opposite sides in the axial direction and the outer diameter side of the outer-diameter-side portion of the resin ring are restricted by the recess of the base ring, allowing the inner-diameter-side portion to be reliably slid radially inward during thermal deformation.

It may be preferable that the resin ring is constituted by a plurality of resin segments segmented in the circumferential direction, and each of the resin segments is fixed to each of the segments constituting the base ring. According to this preferable configuration, the resin segments are supported by the segments of the base ring, and can follow the movement in the radial direction of the rotating shaft together with the segments of the base ring.

It may be preferable that the base ring is held in an annular shape by an annular garter spring disposed around outer peripheral surfaces of the segments constituting the base ring. According to this preferable configuration, since the garter spring is disposed around the outer peripheral surfaces of the segments constituting the rigid base ring, the resin ring can be prevented from being deformed.

It may be preferable that the segment seal is pressed against an installation surface of the housing by a biasing member for biasing the base ring in the axial direction. According to this preferable configuration, the segment seal can be held such that it is pressed against the installation surface of the housing by the biasing member.

It may be preferable that the biasing member is attached to the base ring. According to this preferable configuration, the biasing force of the biasing member can act on the base ring, preventing the biasing force of the biasing member from acting directly on the resin ring.

### {BRIEF DESCRIPTION OF DRAWINGS}

FIG. 1 is a cross-sectional view illustrating a tandem-typed segment seal according to a first embodiment of the present invention.
FIG. 2 is an enlarged view of the main portion of FIG. 1.
FIG. 3A is a view of a base ring in an axial direction from the equipment exterior side in the first embodiment, FIG. 3B is a view from arrow A in the first embodiment, and FIG. 3C is a cross-sectional view along arrow B-B in the first embodiment.
FIG. 4A is a view of a resin ring in the axial direction from the equipment exterior side in the first embodiment, and FIG. 4B is a cross-sectional view along arrow C-C in the first embodiment.
FIG. 5 is a schematic diagram illustrating a sealing function in one temperature range in the first embodiment.
FIG. 6 is a schematic diagram illustrating a sealing function in another temperature range in the first embodiment.
FIG. 7 is a view of the base ring in the other temperature range in the axial direction from the equipment exterior side in the first embodiment.
FIG. 8 is a view of the resin ring in the other temperature range in the axial direction from the equipment exterior side in the first embodiment.
FIG. 9 is a cross-sectional view illustrating a segment seal according to a second embodiment of the present invention.
FIG. 10 is a cross-sectional view illustrating a segment seal according to a third embodiment of the present invention.
FIG. 11 is a cross-sectional view illustrating a segment seal according to a fourth embodiment of the present invention.

### {DESCRIPTION OF EMBODIMENTS}

Modes for carrying out a segment seal according to the present invention will be described below based on embodiments.

### {First embodiment}

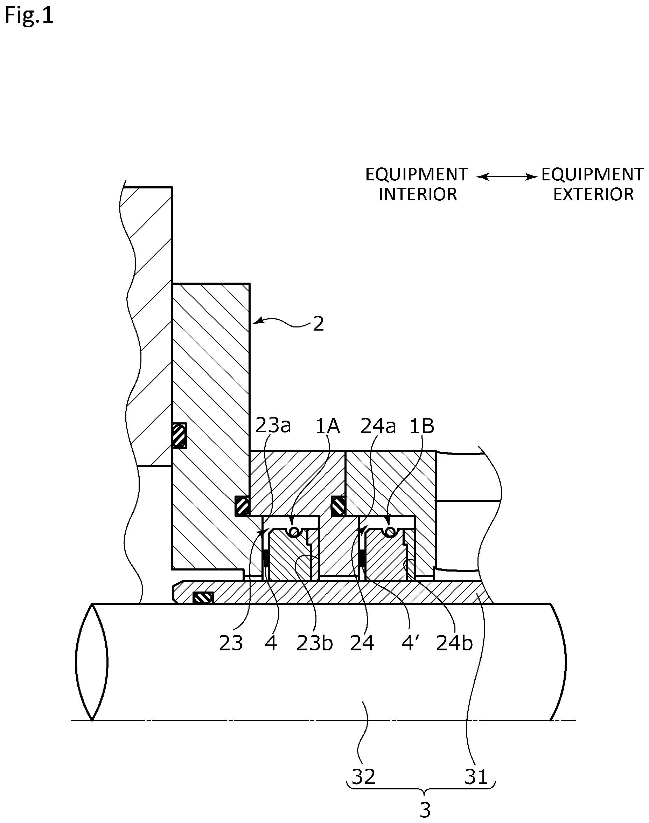

A segment seal according to a first embodiment of the present invention will be described with reference to FIG. 1 to FIG. 6. In the following description, the left side on a paper plane of FIG. 1 is referred to as an equipment interior side of rotating equipment to which the segment seal is applied, and the right side on a paper plane of FIG. 1 is referred to as an equipment exterior side thereof. In this embodiment, the equipment interior side will be described as a sealed fluid side (i.e., the high-pressure side), and the equipment exterior side will be described as an atmosphere side (i.e., the low-pressure side).

As illustrated in FIG. 1, segment seals 1A, 1B of a first embodiment are housed to seal an annular space between a housing 2 and a rotating shaft 3 extending through the housing 2. The rotating shaft 3 of this embodiment includes a shaft body 32 made of a metal such as stainless steel, and a sleeve 31 made of a metal such as stainless steel fitted onto the shaft body 32.

In the first embodiment, the segment seals 1A, 1B in a pair are configured as a tandem seal such that they are disposed side by side in an axial direction in an annular space between the housing 2 and the rotating shaft 3. In the description of the pair of segment seals 1A, 1B, the one disposed on the equipment interior side will be referred to as the segment seal 1A, and the other disposed on the equipment exterior side will be referred to as the segment seal 1B.

First, the structure of the housing 2 will be described in detail. As illustrated in FIG. 1, the housing 2 is provided with a first annular recess 23 and a second annular recess 24 arranged side by side in the axial direction for housing the segment seals 1A, 1B. In the first embodiment, the housing 2 has a divided structure composed of a plurality of members, however, it may be composed of a single member.

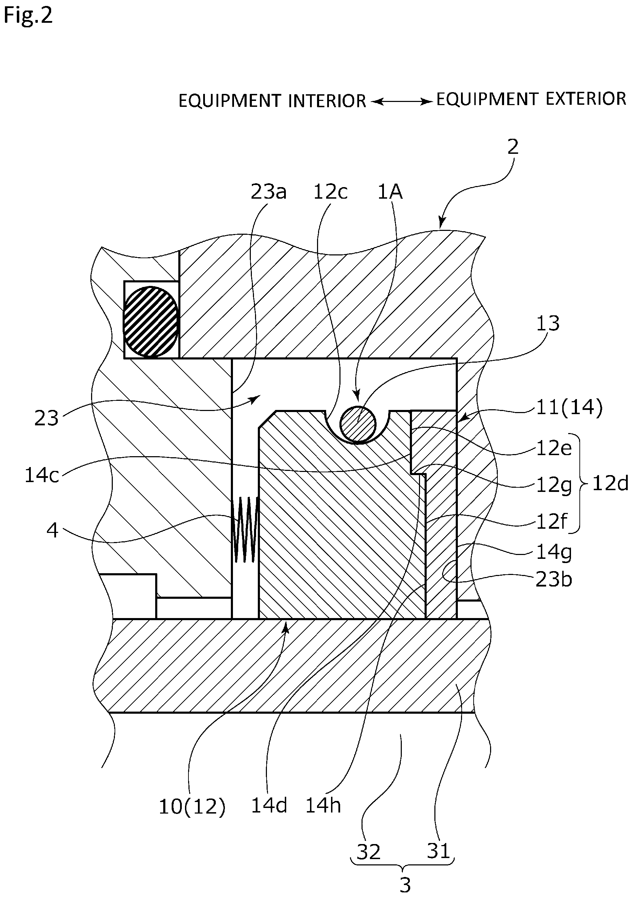

As illustrated in FIGS. 1 and 2, a spring 4 is disposed as a biasing member between an end face 23a on the equipment interior side defining the first annular recess 23 and the segment seal 1A. The segment seal 1A is biased by the spring 4 toward an end face 23b as an installation surface on the equipment exterior side defining the first annular recess 23.

In addition, a spring 4' is disposed as a biasing member between an end face 24a on the equipment interior side defining the second annular recess 24 and the segment seal 1B. The segment seal 1B is biased by the spring 4' toward an end face 24b as the installation surface on the equipment exterior side defining the second annular recess 24.

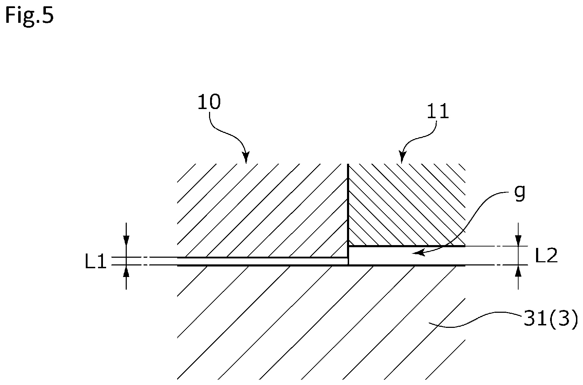

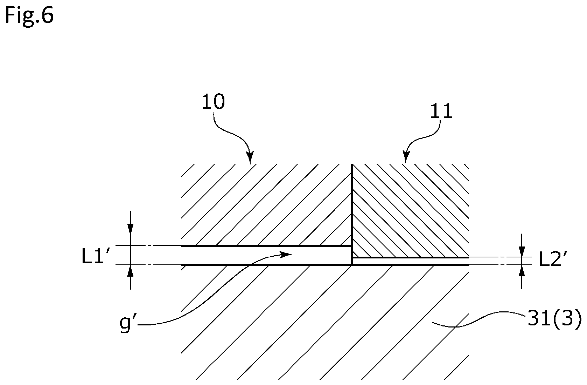

The segment seals 1A, 1B are non-contact segment seals having inner peripheral surfaces disposed slightly apart radially outward from the rotating shaft 3 as described below (see FIGS. 5, 6). Accordingly, the segment seals 1A, 1B are in no-contact with a sleeve 31 of the rotating shaft 3, between which an annular gap g (hereinafter simply also referred to as a gap g (see FIGS. 5, 6)) is formed. The segment seals 1A, 1B are also pressed against the end faces 23b, 24b by the springs 4, 4' to rotate relative to the rotating shaft 3.

Next, the structures of the segment seals 1A, 1B will be described in details. Since the structures of the segment seals 1A, 1B are almost the same, only the segment seal 1A will be described and a description of the segment seal 1B will be omitted.

As illustrated in FIG. 2, the segment seal 1A includes a base ring 10 and a resin ring 11.

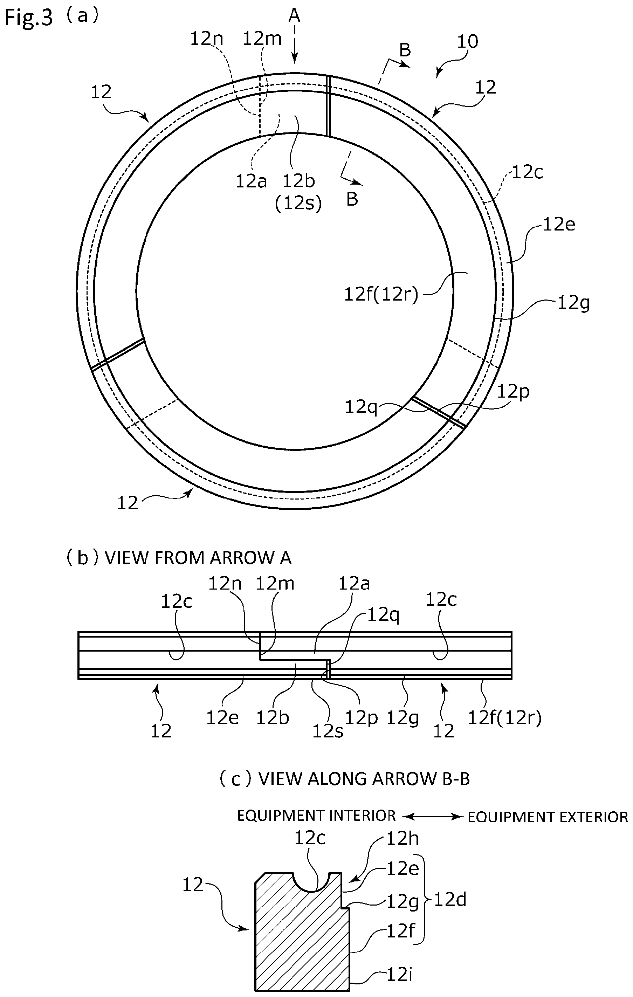

The base ring 10 is fitted onto the rotating shaft 3. Specifically, as illustrated in FIG. 3, the base ring 10 is configured such that three segments 12 segmented in a circumferential direction are combined in an annular shape. FIG. 3 illustrates the shape of the base ring 10 at room temperature.

The segments 12 are made of carbon. In other words, the segments 12 have a lower thermal expansion coefficient than the metal rotating shaft 3.

The segments 12 each have a protruding portion 12a protruding from the equipment interior side of one end in the circumferential direction to one side in the circumferential direction, and a protruding portion 12b protruding from the equipment exterior side of the other end in the circumferential direction to the other side in the circumferential direction. The protruding portions 12a, 12b can be placed in the axial direction to align circumferentially adjacent segments 12 in the axial direction.

The protruding portion 12a is longer in the circumferential direction than the protruding portion 12b. A circumferential end face 12m on the equipment interior side of the main body of the segment 12 is in contact with a circumferential end face 12n of the protruding portion 12a. Accordingly, the sealed fluid on the equipment interior side is less likely to flow in the axial direction toward the equipment exterior side. It should be noted that a circumferential end face 12p on the equipment exterior side in the main body of the segment 12 and a circumferential end face 12q of the protruding portion 12b are slightly apart from each other in the circumferential direction.

The segments 12 have grooves 12c having a U shape in cross section on the outer peripheral surfaces. The grooves 12c are open on the outer diameter side and are formed to extend in the circumferential direction. The grooves 12c are formed in an annular shape with the segments 12 disposed in the circumferential direction. An annular garter spring 13 (see FIG. 2) is housed in the grooves 12c to hold the segments 12 in an annular shape.

The outer diameter sides of end faces 12d on the equipment exterior side of the segments 12 are steps 12h as depressions cut out in a stepped shape. Specifically, radially outer portions 12e of the end faces 12d are parallel to radially inner portions 12f of the end faces 12d and are disposed closer to the equipment interior side than the radially inner portions 12f. Connecting portions 12g connecting the radially outer portions 12e and the radially inner portions 12f extend perpendicular to the radially outer portions 12e and the radially inner portions 12f, i.e., in the axial direction. The steps 12h are defined by the radially outer portions 12e and the connecting portions 12g.

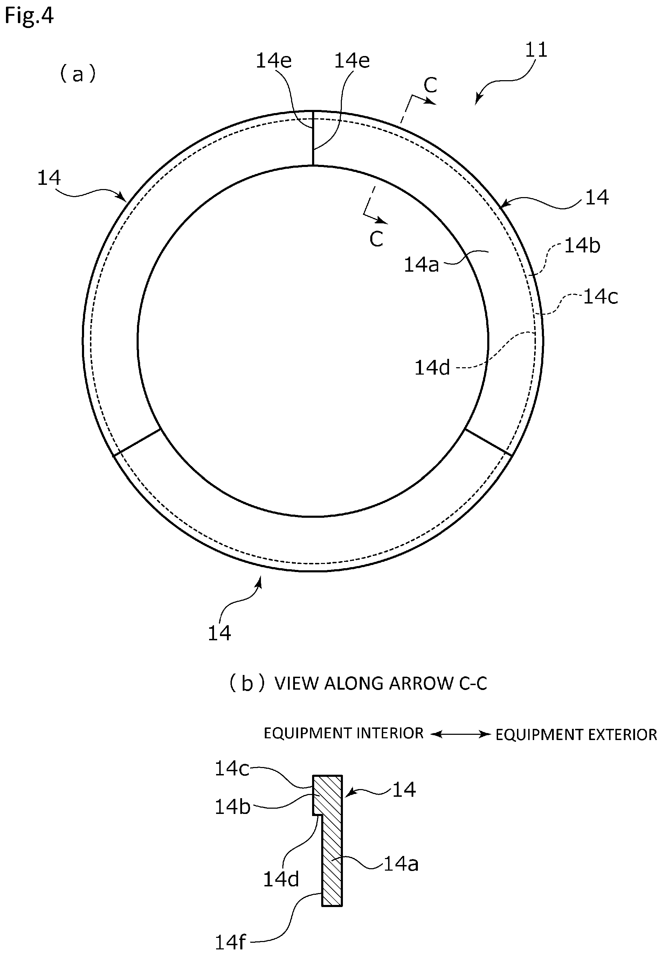

Turning to FIG. 2, the resin ring 11 is attached to the base ring 10. Specifically, as illustrated in FIG. 4, the resin ring 11 is configured such that three resin segments 14 segmented in the circumferential direction are combined in an annular shape. FIG. 4A illustrates the shape of the resin ring 11 at room temperature.

The resin segments 14 are made of polytetrafluoroethylene (PTFE). In other words, the resin segments 14 have a higher thermal expansion coefficient than the metal rotating shaft 3. As long as the resin segments 14 have a higher thermal expansion coefficient than the metal rotating shaft 3, other resin materials than PTFE such as polyether ether ketone (PEEK) and polyimide (PI) can be used.

The resin segments 14 each have a radial portion 14a as an inner-diameter-side portion and an axial portion 14b as an outer-diameter-side portion and an engagement portion, and are formed into a generally inverted L-shape in cross section. The axial portion 14b extends from the radially outer end of the radial portion 14a to the equipment interior side. The inner peripheral side of the radial portion 14a has an inner peripheral end portion axial surface 14f as an axial surface including the inner peripheral end portions of the resin segments 14.

In this embodiment, an example in which circumferential end faces 14e are in contact with each other at room temperature is described, but the circumferential end faces 14e may be apart from each other to form a gap. In the latter case, the thermal expansion coefficient of the resin ring 11 is larger than that of the carbon base ring 10, and the gap between the circumferential end faces 14e is thus preferably wider than the gap between the circumferential end faces 12p, 12q of the segments 12 of the base ring 10.

Turning to FIG. 2, the axial portion 14b is fitted and bonded to the step 12h (see FIG. 3) defined by the radially outer portion 12e and the connecting portion 12g of the end face 12d in the base ring 10. Specifically, the end face 14c on the equipment interior side of the axial portion 14b is bonded to the radially outer portion 12e of the end face 12d in the base ring 10 with an adhesive, and the inner peripheral surface 14d of the axial portion 14b is bonded to the connecting portion 12g of the end face 12d in the base ring 10 with an adhesive. It should be noted that the radial portion 14a of the resin ring 11 is not bonded to the radially inner portion 12f of the end face 12d in the base ring 10.

The resin segment 14 is disposed across an axial end face 12r on the equipment exterior side of the main body of one of the segments 12 and an axial end face 12s on the equipment exterior side of the protruding portion 12b of another adjacent segment of the segments 12 (not illustrated). The axial portion 14b is bonded to the step 12h of the one of the segments 12, but is not bonded to the step 12h of the other segment of the segments 12.

With the resin segments 14 attached to the segments 12 of the base ring 10, the circumferential end faces 14e of the resin segments 14 are in contact with each other. In addition, the resin segments 14 each cover the gap in the axial direction between the circumferential end face 12p on the equipment exterior side in the main body of the segment 12 and the circumferential end face 12q of the protruding portion 12b. Accordingly, the sealed fluid on the equipment interior side is less likely to flow in the axial direction toward the equipment exterior side. In addition, an equipment-exterior-side end face 14g of the resin segment 14 is in contact with the end face 23b of the housing 2, and the sealed fluid on the equipment interior side is thus less likely to flow in the radial direction toward the equipment exterior side.

A mode in which the axial portion 14b is fitted and bonded to the step 12h is illustrated, however, it is not necessarily bonded. In addition, for example, as in the second to fourth embodiments described below, it may be fixed by fitting, press-fitting, or due to a difference in thermal expansion.

Further, as illustrated in FIG. 5, in the room temperature range, the inner peripheral surface of the resin ring 11 is disposed closer to the outer diameter side than the inner peripheral surface of the base ring 10.

Next, the sealing function of the segment seal 1A in accordance with changes in the temperature environment will be described with reference to FIGS. 5 and 6. For ease of explanation, in FIGS. 5 and 6, the gap g between the segment seal 1A and the rotating shaft 3 is illustrated larger than it actually is.

A sealing function when the fluid on the equipment exterior side is in one temperature range and a sealing function when the fluid on the equipment exterior side is in another temperature range will be described here. In this embodiment, the one temperature range will be described as a room temperature range, and the other temperature range will be described as an extremely low temperature range. Here, the extremely low temperature is 0°C or less, preferably -100°C or less.

As illustrated in FIG. 5, when the fluid on the equipment exterior side is in the one temperature range, the gap g is formed between the segment seal 1A and the rotating shaft 3. The gap g is formed such that the inner peripheral surface of the base ring 10 is disposed apart from the outer diameter side of the sleeve 31 by a slight distance L1. Additionally, the inner peripheral surface of the resin ring 11 is disposed apart from the outer diameter side of the sleeve 31 by a distance L2 which is larger than the distance L1(L1<L2).

The gap g between the segment seal 1A and the rotating shaft 3 is sealed by the slight gap between the base ring 10 and the sleeve 31. It should be noted that the resin ring 11 does not substantially function as a seal.

The term "sealing" here is not limited to complete sealing between the equipment interior side and the equipment exterior side, but also includes that the movement of fluid between the equipment interior side and the equipment exterior side is restricted, in other words, that the movement of fluid between the equipment interior side and the equipment exterior side is partially allowed.

As illustrated in FIG. 6, in the other temperature range where the fluid on the equipment exterior side is at extremely low temperature, a gap g' is formed between the segment seal 1A and the rotating shaft 3. Specifically, due to the difference in thermal expansion coefficient between the rotating shaft 3 and the base ring 10, the rotating shaft 3 thermally contracts to a greater extent than the base ring 10. Accordingly, a distance L1' between the base ring 10 and the sleeve 31 is increased, and the base ring 10 substantially has reduced sealing function or fails to function as a seal (L1<L1').

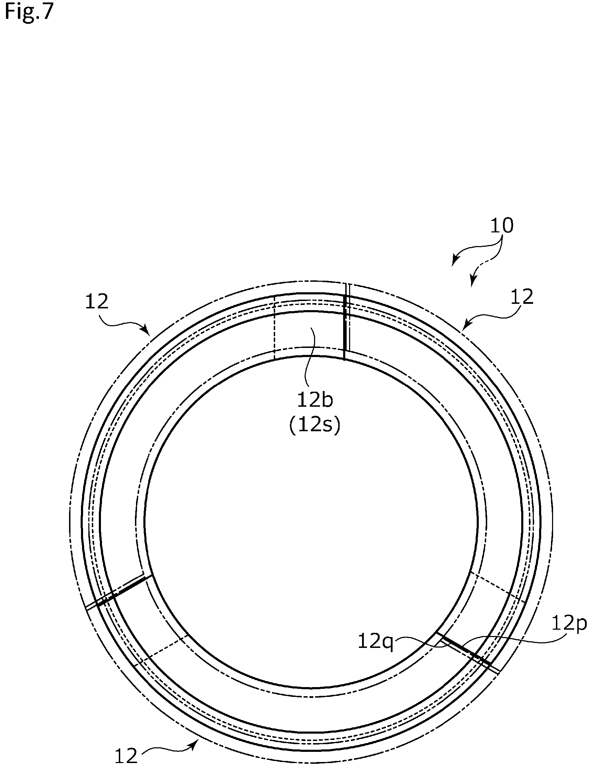

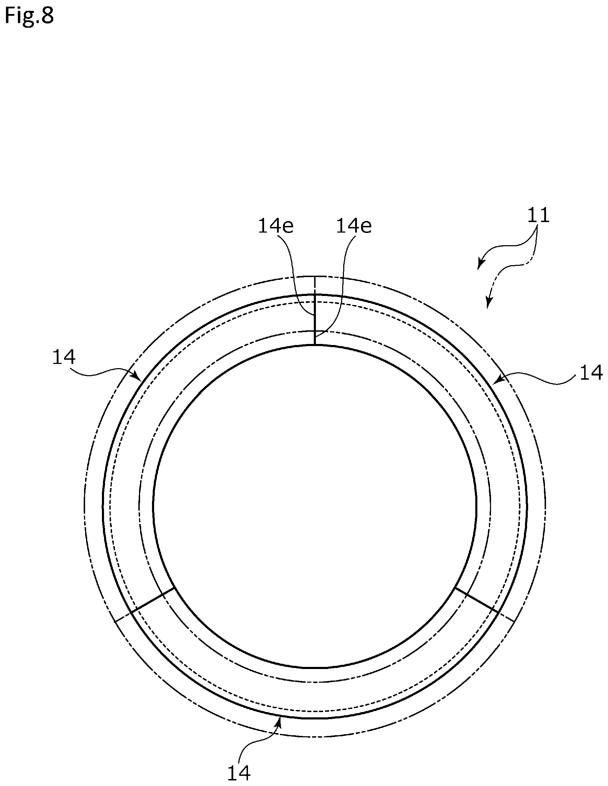

In the other temperature range where the fluid on the equipment exterior side is at an extremely low temperature, as illustrated in FIG. 7, the base ring 10 contracts slightly overall toward the center, reducing the gap between the circumferential end faces 12p, 12q. Further, as illustrated in FIG. 8, the resin ring 11 contracts overall toward the center with the circumferential end faces 14e being in contact with each other. For the amount of overall contraction, the resin ring 11 is greater. In FIGS. 7 and 8, the shape of the rings in the one temperature range at room temperature is illustrated by a two-dot dashed line.

Meanwhile, due to the difference in thermal expansion coefficient between the rotating shaft 3 and the resin ring 11, the resin ring 11 thermally contracts to a greater extent than the rotating shaft 3. Accordingly, the inner peripheral surface of the resin ring 11 is arranged apart radially outward from the sleeve 31 by a slight distance L2' (L2>L2'). The distance L2' is smaller than the distance L1' (L1'>L2').

Accordingly, when the fluid on the equipment exterior side is in the other temperature range, the gap g' between the segment seal 1A and the rotating shaft 3 is sealed by the slight gap between the resin ring 11 and the sleeve 31.

As described above, in the one temperature range where the fluid on the equipment exterior side is in a higher temperature environment than the other temperature ranges, the base ring 10 performs a sealing function, and in the other temperature range that is in a lower temperature environment than the one temperature range, the resin ring 11 disposed side by side with the base ring 10 performs a sealing function, such that the sealing function can be performed in a wide range of temperatures.

Further, the resin ring 11 can be fixed to the highly rigid base ring 10 to stabilize the shape of the resin ring 11.

The resin ring 11 also has higher toughness than the base ring 10. Accordingly, even if the resin ring 11 contracts, the axial portion 14b as the engagement portion with the base ring 10 is less likely to be damaged.

Further, since the axial portion 14b of the resin ring 11 is engaged with and attached to the step 12h of the base ring 10, the resin ring 11 can be thermally deformed radially inward to a greater extent than the base ring 10 to ensure sealing performance due to the difference in thermal expansion. Additionally, the resin ring 11 can follow the centering function of the base ring 10, such that the resin ring 11 can perform a sealing function even at the low temperature range.

Further, due to contraction, a gap in the axial direction may be formed between the radially inner portion 12f of the base ring 10 and the equipment-exterior-side end face 14h of the resin ring 11, from which leakage can be prevented for the following reasons. The resin ring 11 is fixed to the base ring 10, and the resin segments 14 are in contact with each other in the circumferential direction.

Further, since the base ring 10 is not disposed radially inward of the resin ring 11, the resin ring 11 can be thermally deformed radially inward in accordance with changes in the operating temperature environment to reliably adjust the gap between the resin ring 11 and the sleeve 31.

Further, a position of the axial portion 14b of the resin ring 11 is restricted by the base ring 10, and the radial portion 14a is slidable in the radial direction relative to the base ring 10. Specifically, the axial portion 14b is fitted and bonded to the step defined by the radially outer portion 12e and the connecting portion 12g of the end face 12d in the base ring 10, the radial portion 14a is not bonded to the radially inner portion 12f of the end face 12d in the base ring 10, and the inner peripheral end portion axial surface 14f of the radial portion 14a and an opposing surface 12i of the radially inner portion 12f as the axial surface of the segments 12 opposing the inner peripheral end portion axial surface 14f are each formed into a plane extending in the radial direction. Accordingly, the radial portion 14a can be thermally deformed in accordance with changes in temperature environment, and can be reliably slid radially inward.

Further, the resin ring 11 is constituted by the plurality of resin segments 14 segmented in the circumferential direction, and the resin segments 14 are fixed to the segments 12 constituting the base ring 10. Accordingly, when the rotating shaft 3 moves in the radial direction due to shaft vibration or the like, the resin segments 14 can follow the movement in the radial direction of the rotating shaft 3 together with the segments 12 of the base ring 10.

Further, since the base ring 10, to which the resin ring 11 is fixed, is held in an annular shape by the annular garter spring 13 arranged around the outer peripheral surfaces of the rigid segments 12, no elastic force of the garter springs 13 acts on the resin ring 11, and the resin ring 11 can be prevented from being deformed.

Further, the segment seals 1A, 1B are pressed against the end faces 23b, 24b of the housing 2 by the springs 4, 4' that bias the base ring 10 in the axial direction. Accordingly, the segment seals 1A, 1B can be held in pressure contact with the end faces 23b, 24b of the housing 2 by the springs 4, 4', and the biasing force of the springs 4, 4' acts on the base ring 10, such that no biasing force of the springs 4, 4' acts directly on the resin ring 11, and the resin ring 11 can be prevented from being deformed.

Further, the resin rings 11 of the segment seals 1A, 1B are in contact with the end faces 23b, 24b of the housing 2, providing high sliding properties, such that when the rotating shaft 3 moves in the radial direction due to shaft vibration or the like, the segment seals 1A, 1B can smoothly follow that movement.

Further, since the resin ring 11 is disposed on the equipment exterior side that is the low-pressure side, the resin ring 11 is less susceptible to the influence of the fluid pressure of the sealed fluid on the equipment interior side that is the high-pressure side. Specifically, resin is more susceptible to deformation due to temperature and pressure than carbon, and when the segment seals 1A, 1B are made of resin, they may be deformed by fluid pressure, spring pressure, garter spring pressure, changes in temperature, or the like and may have reduced sealing function or fail to function. However, in this configuration, the base of the segment seals 1A, 1B is composed of the carbon base ring 10, to which the resin ring 11 is attached on the low-pressure side, such that they are less susceptible to deformation due to pressure and temperature, and can maintain high followability in the radial direction even in the high-pressure or low-temperature environment.

Further, even if the segment seals 1A, 1B rotate relative to the housing 2, the resin ring 11 is less damaged because of its excellent self-lubricating properties.

### {Second embodiment}

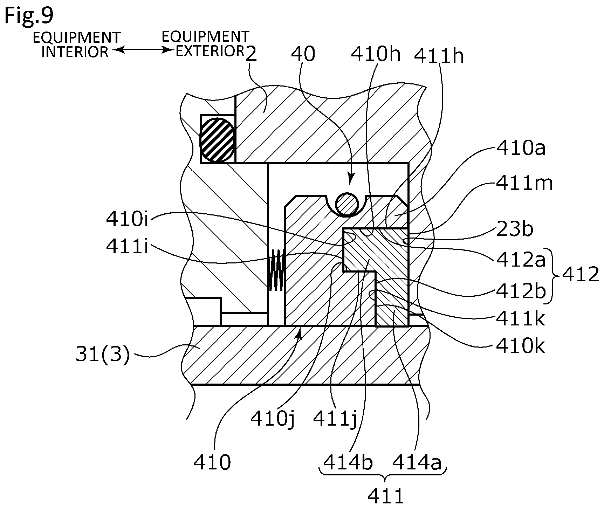

Next, a segment seal according to a second embodiment of the present invention will be described with reference to FIG. 9. Redundant descriptions of the same configurations as those of the first embodiment will be omitted.

As illustrated in FIG. 9, a segment seal 40 of the second embodiment includes a base ring 410 and a resin ring 411.

The base ring 410 has an annular fitting recess 412 on the equipment exterior side into which the resin ring 411 can be fitted. In the fitting recess 412, an outer-diameter-side portion 412a is recessed on the equipment interior side to a greater extent than an inner-diameter-side portion 412b. In other words, the fitting recess 412 is formed into a generally inverted L-shape in cross section. The base ring 410 has an annular portion 410a formed in the outer-diameter-side portion 412a of the fitting recess 412.

The fitting recess 412 is defined by a surface 410h extending in the axial direction, a surface 410i extending radially inward from the surface 410h, a surface 410j extending from the surface 410i toward the equipment exterior side in the axial direction, and a surface 410k extending radially inward from the surface 410j.

The resin ring 411 has a radial portion 414a as an inner-diameter-side portion and an axial portion 414b as an outer diameter portion, and is formed into a generally inverted L-shape in cross section.

An outer peripheral surface 411h of the resin ring 411 is disposed opposite the surface 410h. Likewise, an end face 411i on the equipment interior side and on the outer diameter side is disposed opposite the surface 410i, an intermediate peripheral surface 411j is disposed opposite the surface 410j, and an end face 411k on the equipment interior side and on the inner diameter side is disposed opposite the surface 410k.

The resin ring 411 may be attached to the fitting recess 412 due to the difference in thermal expansion coefficient between the resin ring 411 and the base ring 410 or may be press-fitted into the fitting recess 412. The fixing method is not limited and may be adhesion, fitting, or the like.

Accordingly, since the axial portion 414b of the resin ring 411 is fitted into the outer-diameter-side portion 412a of the fitting recess 412, the resin ring 411 can be attached more firmly to the base ring 410 than in the first embodiment. Therefore, the resin ring 411 is less susceptible to the influence of the fluid on the equipment interior side.

The axial portion 414b is also fitted into the outer-diameter-side portion 412a of the fitting recess 412, such that the radial portion 414a can be ensured to be thermally deformed radially inward.

With the resin ring 411 fitted into the fitting recess 412, an end face on the equipment exterior side of the annular portion 410a and an end face on the equipment exterior side of the radial portion 414a are flush with each other.

Due to contraction, gaps may be formed between the radial portion 414a and the axial portion 414b of the resin ring 411, and the inner-diameter-side portion 412b and the outer-diameter-side portion 412a of the fitting recess 412 of the base ring 410, from which leakage can be prevented for the following reasons. The resin ring 411 is at least partially fixed to the base ring 410, and an equipment-exterior-side end face 411m of the resin ring 411 is in contact with the end face 23b of the housing 2 in the axial direction.

The resin ring 411 has also higher toughness than the base ring 410. Even if the resin ring 411 contracts, the axial portion 414b as the engagement portion with the base ring 410 is less likely to be damaged.

### {Third embodiment}

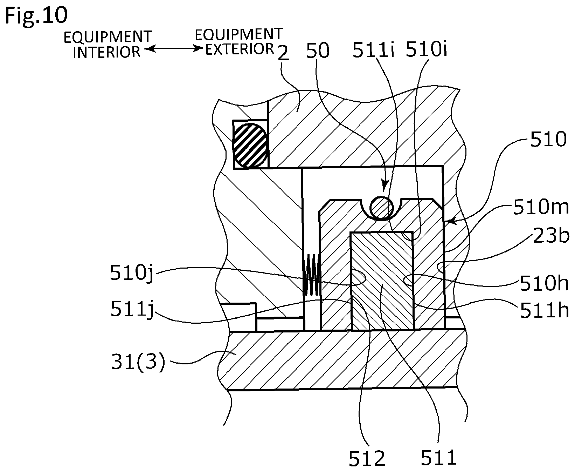

Next, a segment seal according to a third embodiment of the present invention will be described with reference to FIG. 10. Redundant descriptions of the same configurations as those of the first embodiment will be omitted.

As illustrated in FIG. 10, a segment seal 50 of the third embodiment includes a base ring 510 and a resin ring 511.

The base ring 510 has an annular recess 512 that is open radially inward. The annular recess 512 is formed in an annular shape. The resin ring 511 is formed into a rectangle in cross section. A pin (not illustrated) extending in the axial direction extends through the base ring 510 and the resin ring 511, and the resin ring 511 is attached and fixed to the annular recess 512. The fixing method is not limited and may be press-fitting, bonding, fitting, or the like.

The annular recess 512 is defined by a surface 510h extending in the radial direction on the equipment exterior side, a surface 510i extending in the axial direction from the surface 510h, and a surface 510j extending radially inward from surface 510i.

An equipment-exterior-side end face 511h of the resin ring 511 is disposed opposite the surface 510h. Likewise, an outer peripheral surface 511i is disposed opposite the surface 510i, and an equipment-interior-side end face 511j is disposed opposite the surface 510j.

Accordingly, the annular recess 512 of the base ring 510 restricts the positions of the opposite sides in the axial direction and the outer diameter side of the outer-diameter-side portion of the resin ring 511, such that the inner-diameter-side portion can be reliably slid radially inward.

Further, even if a gap is formed between the resin ring 511 and the annular recess 512 of the base ring 510 during contraction, the resin ring 511 can move in the axial direction when the high-pressure fluid flows into the low-pressure side, preventing the resin ring 511 from falling off the base ring 510.

Further, an equipment-exterior-side end face 510m of the base ring 510 is in contact with the end face 23b of the housing 2 in the axial direction, and sealing between them is provided.

### {Fourth embodiment}

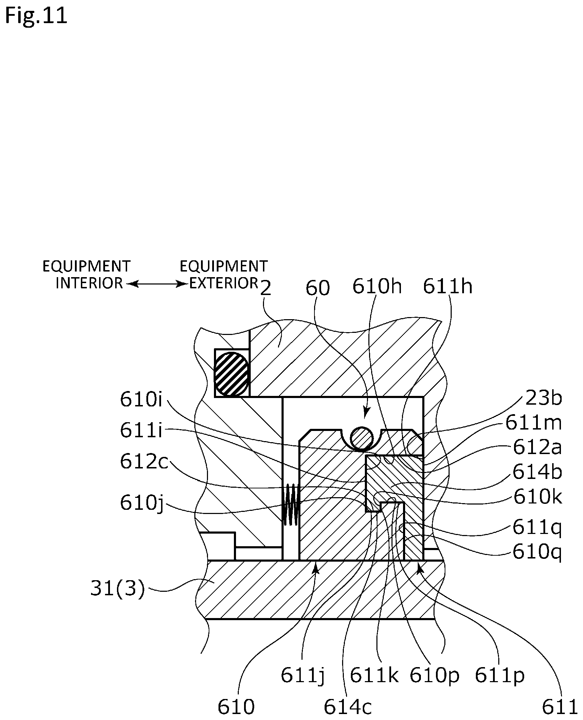

Next, a segment seal according to a fourth embodiment of the present invention will be described with reference to FIG. 11. Redundant descriptions of the same configurations as those of the second embodiment will be omitted.

As illustrated in FIG. 11, a segment seal 60 of the fourth embodiment includes a base ring 610 and a resin ring 611.

The base ring 610 has a fitting recess 612 having a recess 612c recessed radially inward at an end portion on the equipment interior side of an outer-diameter-side portion 612a.

The fitting recess 612 is defined by a surface 610h extending in the axial direction, a surface 610i extending radially inward from the surface 610h, a surface 610j extending from the surface 610i toward the equipment exterior side in the axial direction, a surface 610k extending radially outward from the surface 610j, a surface 610p extending in the axial direction from the surface 610k, and a surface 610q extending radially inward from the surface 610p. The recess 612c is defined by the surfaces 610i, 610j, and 610k.

A projection 614c is formed at an end portion on the equipment interior side of an axial portion 614b of the resin ring 611 and protrudes radially inward.

An outer peripheral surface 611h of the resin ring 611 is disposed opposite the surface 610h. Likewise, an end face 611i on the equipment interior side and on the outer diameter side is disposed opposite the surface 610i, an intermediate peripheral surface 611j on the inner diameter side is disposed opposite the surface 610j, a connecting surface 611k extending in the radial direction is disposed opposite the surface 610k, an intermediate peripheral surface 611p on the outer diameter side is disposed opposite the surface 610p, and an end face 611q on the equipment interior side and on the inner diameter side is disposed opposite the surface 610q. The projection 614c is defined by the end face 611i, the intermediate peripheral surface 611j, and the connecting surface 611k.

The projection 614c of the resin ring 611 is fitted into the recess 612c of the base ring 610, such that the base ring 610 and the resin ring 611 are prevented from being separated from each other in the axial direction and are firmly fixed together.

A gap may be formed between the base ring 610 and the resin ring 611 other than between the recess 612c and the projection 614c, from which leakage can be prevented for the following reasons. The resin ring 611 is at least partially fixed to the base ring 610, and an equipment-exterior-side end face 611m of the resin ring 611 is in contact with the end face 23b of the housing 2 in the axial direction.

Further, the resin ring 611 has higher toughness than the base ring 610, such that the resin ring 611 is less likely to be damaged even during contraction.

Although the embodiments of the present invention have been described above with reference to the drawings, its specific configuration is not limited to these embodiments, and any changes and additions made without departing from the scope of the present invention are included in the present invention.

For example, in the first to fourth embodiments, a mode in which the base ring is segmented into three segments in the circumferential direction is illustrated, but the number of segments can be freely changed so long as it is two or more.

Further, in the first to fourth embodiments, a mode in which the resin ring is segmented into three segments in the circumferential direction is illustrated, but the number of segments can be freely changed. The resin ring may be also composed of a single member without being segmented.

Further, in the first to fourth embodiments, a mode in which the position of the outer-diameter-side portion of the resin ring is restricted by the base ring is illustrated, however, the outer-diameter-side portion of the resin ring may be attached to the base ring such that the outer-diameter-side portion is deformable in the radial direction.

Further, in the first to fourth embodiments, a mode in which the garter spring is attached to the base ring is illustrated, however, the garter spring may be attached to the resin ring.

Further, in the first to fourth embodiments, a mode in which the base ring is biased by the biasing member, however, the resin ring may be biased by the biasing member.

Further, in the first to fourth embodiments, a non-contact segment seal is illustrated, however, a contact segment seal may also be used.

Further, in the first to fourth embodiments, a tandem segment seal is illustrated, however, a single or double segment seal may also be used.

Further, in the first to fourth embodiments, an example in which the rotating shaft includes the shaft body and the sleeve is described, however, the rotating shaft may include only the shaft body and not include the sleeve.

Further, in the first to fourth embodiments, a mode in which a side surface of the base ring is provided with the depression, and the resin ring is provided with the protruded engagement portion is illustrated, however, the side surface of the base ring may be provided with the protrusion and the resin ring may be provided with the recessed engagement portion that is engaged with the protrusion.

Further, the high pressure fluid on the equipment interior side may be of any type, and may be, for example, a sealed fluid or a seal gas.

### {REFERENCE SIGNS LIST}

1A, 1B Segment seal
2 Housing
3 Rotating shaft
4, 4' Spring
10 Base ring
11 Resin ring
12 Segment
12h Step (depression)
13 Garter spring
14 Resin segment
14a Radial portion (inner-diameter-side portion)
14b Axial portion (outer-diameter-side portion, engagement portion)
23b, 24b End face (installation surface)
40, 50, 60 Segment seal
410 Base ring
411 Resin ring
510 Base ring
511 Resin ring
610 Base ring
611 Resin ring
g, g' Gap(annular gap)

## Claims

1. A segment seal that is disposed with rotation thereof restricted between a housing and a rotating shaft extending through the housing, and seals a space between the housing and the rotating shaft, the segment seal, comprising:
a base ring fitted onto the rotating shaft and constituted by a plurality of segments segmented in a circumferential direction; and
a resin ring disposed side by side in an axial direction with the base ring, wherein
at least a portion of the base ring is disposed on a high-pressure side in the axial direction of the resin ring, and
the resin ring has a higher thermal expansion coefficient than the base ring.

2. The segment seal according to claim 1, wherein
the resin ring is attached to the base ring.

3. The segment seal according to claim 2, wherein
the base ring has a protrusion or a depression formed on a side surface of the base ring, and
the resin ring has an engagement portion that is engaged with the protrusion or the depression.

4. The segment seal according to claim 2, wherein
a position of an outer-diameter-side portion of the resin ring is restricted by the base ring,
the resin ring has an axial surface including an inner peripheral end portion of the resin ring, and
the axial surface of the resin ring is parallel to an axial surface of the base ring opposite the axial surface of the resin ring.

5. The segment seal according to claim 4, wherein
the base ring has a recess that is open on an inner diameter side, and
the resin ring is disposed in the recess.

6. The segment seal according to any one of claims 1 to 5, wherein
the resin ring is constituted by a plurality of resin segments segmented in the circumferential direction, and
each of the resin segments are fixed to each of the segments constituting the base ring.

7. The segment seal according to claim 1, wherein
the base ring is held in an annular shape by an annular garter spring disposed around outer peripheral surfaces of the segments constituting the base ring.

8. The segment seal according to claim 1, wherein
the segment seal is pressed against an installation surface of the housing by a biasing member for biasing the base ring in the axial direction.

9. The segment seal according to claim 8, wherein
the biasing member is attached to the base ring.
